# EUROPÄISCHE PATENTSCHRIFT

(11) **EP 3 555 197 B1**
(45) Veröffentlichungstag und Bekanntmachung des Hinweises auf die Patenterteilung: **15.10.2025**
(21) Anmeldenummer: 17822566.0
(22) Anmeldetag: 04.12.2017
(51) Int. Cl.: C08L 9/02

(54) **KAUTSCHUKMISCHUNG**
RUBBER MIXTURE
MÉLANGE DE CAOUTCHOUC

(30) Priorität: 16.12.2016 DE 102016225302
(43) Veröffentlichungstag der Anmeldung: 23.10.2019
(73) Patentinhaber: ContiTech Deutschland GmbH, 30175 Hannover (DE)
(72) Erfinder: ONKEN, Kristian, 34131 Kassel (DE); STORRE, Jens, 37176 Nörten-Hardenberg (DE); SCHOBERT, Klaus, 31552 Nienburg (DE); BEHRENS, Henrik, 30629 Hannover (DE); PRÜSS, Corinna, 30419 Hannover (DE)
(74) Vertreter: Preusser, Andrea
(86) Internationale Anmeldenummer: PCT/EP2017/081312
(87) Internationale Veröffentlichungsnummer: WO 2018/108599

(56) Entgegenhaltungen:
- EP-A1- 2 441 797
- EP-A1- 2 871 212
- CN-A- 105 086 017

## Beschreibung

Die Erfindung betrifft eine Kautschukmischung, die insbesondere für den Einsatz im Trinkwasser- und Lebensmittelbereich geeignet ist.

Die meisten klassischen Vernetzungschemikalien wie z.B. Schwefelbeschleuniger oder Peroxide erzeugen während der Vulkanisation Zersetzungsprodukte, die im Elastomerprodukt nicht gewünscht sind und häufig negative organoleptische Eigenschaften verursachen. Zudem sind die meisten Spaltprodukte derzeit noch nicht vollständig toxikologisch untersucht bzw. bewertet.

Diese Bedenken hat das Deutsche Umweltbundesamt (UBA) dazu veranlasst, die Verwendung der klassischen Vernetzungschemikalien in der neuen Elastomerleitlinie (deutsche Regelung für Elastomere in Kontakt mit Trinkwasser) nach dem 31.12.2021 zu verbieten, sofern die Unbedenklichkeit der Substanzen nicht durch umfangreiche toxikologische Untersuchungen nachgewiesen wird.

Daher werden alternative Vernetzungschemikalien gesucht, die bei der Vulkanisation keine Spaltprodukte erzeugen und somit keine geruchliche und geschmackliche Beeinträchtigung verursachen können. Zudem sollten sie, im Sinne der Elastomerleitlinie, auch nach 2021 zugelassen sein.

Aus dem Stand der Technik ist bekannt, dass Harze, bevorzugt Butylphenol-FormaldehydHarze, als Vernetzungschemikalie für bestimmte Elastomere verwendet werden können.

Der Vorteil dieser Art der Vernetzung liegt in dem vollständigen Einbau der Vernetzungschemikalie in die Polymerketten, wodurch keine Beschleuniger-Spaltprodukte entstehen. Die häufig mit den Spaltprodukten einhergehenden negativen organoleptischen Eigenschaften und potentielle Migration der Spaltprodukte in das Medium, z.B. Trinkwasser, sind somit verhindert.

Bereits länger bekannt ist die Harzvernetzung im Bereich der Bladder-Herstellung für Autoreifen, bei der bevorzugt Butylkautschuk oder halogenierter Butylkautschuk (CIIR und BIIR) verwendet wird, siehe bspw. EP1016691A1.

In EP2871212A1 ist beschrieben, dass EPDM-Kautschuk, IIR-Kautschuk, CIIR-Kautschuk, BIIR-Kautschuk oder eine Mischung hiervon mit 3 bis 10 phr Butylphenol-Formaldehyd-Harz und einem Aktivierungssytem bestehend aus 1 bis 8 phr ZnO, 2 bis 6 phr einer C₆₋₂₄-Carbonsäure und einem chloriertem Polymer, wie CIIR, CPE, chloriertes Polyisopren oder chlorierter NR, vernetzt werden kann. Eine derartige Zusammensetzung zeichnet sich durch einen optimierten Druckverformungsrest (DVR) aus, so dass das Elastomer als Dichtungsring im Trinkwasserbereich eingesetzt werden kann.

Aktivierte Zeolithe und / oder Metallhalogenide können hierbei die Harz-Vernetzungsreaktion unterstützen, siehe bspw. EP2441798A1.

Gemäß neueren gesetzlichen Vorgaben, siehe bspw. EN45545, müssen auch Artikel für den Trinkwasserbereich den erhöhten Anforderungen hinsichtlich des Brand- bzw. Flammschutzes erfüllen. Dies ist mit den oben aus dem Stand der Technik bekannten Kautschukmischungen bisher nicht möglich.

Die Aufgabe der vorliegenden Erfindung besteht somit darin, eine Kautschukmischung bereitzustellen, die sich mit wenigstens einem Harz gut vernetzen lässt und die gleichzeitig den Anforderungen für eine Trinkwasserzulassung und den erhöhten Anforderungen hinsichtlich des Brand- bzw. Flammschutzes genügt. Gleichzeitig sollen sich die weiteren physikalischen Eigenschaften der Kautschukmischung nicht weiter verschlechtern.

Gelöst wird diese Aufgabe dadurch, dass die Kautschukmischung wenigstens einen Kautschuk und wenigstens einen Füllstoff und wenigstens ein Harz als Vernetzungsmittel und wenigstens ein Flammschutzmittel und wenigstens eine Carbonsäure enthält, wobei der Kautschuk ausgewählt ist aus der Gruppe bestehend aus Nitrilkautschuk (NBR) und (teil)hydrierter Nitrilkautschuk (HNBR) und wobei als Flammschutzmittel Zn-Stearat oder Aluminiumtrihydrat oder Magnesiumhydroxid oder Hydrotalcit oder eine halogenfreie Phosphatverbindung oder Blähgraphit jeweils alleine oder in einer Kombination aus wenigstens zwei Flammschutzmitteln verwendet wird..

Der Kautschuk ist erfindungsgemäß ausgewählt aus der Gruppe bestehend aus Nitrilkautschuk (NBR) und (teil)hydrierter Nitrilkautschuk (HNBR).

Die genannten Kautschuke können hierbei alleine oder in einer Kombination eingesetzt werden.

Zusätzlich kann die Kautschukmischung noch wenigstens ein thermoplastisches Elastomer (TPE) und / oder einen Thermoplasten (TP) enthalten. Bevorzugte TPE und / oder TP sind hierbei: Polyolefin, insbesondere Polyethylen (PE) oder Polypropylen (PP), und / oder Polystyrol und / oder Polyamid (PA), beispielsweise PA6 oder PA6.6, und / oder Polyester (PES) und / oder Polyvinylchlorid (PVC).

Erfindungswesentlich ist es, dass die Kautschukmischung mit wenigstens einem Harz vernetzt wird. Hierbei können alle der fachkundigen Person bekannten Harze jeweils alleine oder in einer Kombination aus wenigstens zwei Harzen verwendet werden. Bevorzugt ist die Verwendung von Phenolharz, Alkyl-Phenolharz, Alkyl-Phenol-Formaldehydharz, insbesondere solcher Harze, die tert.-Butyl-Reste oder tert.-Octyl-Reste am Phenolring enthalten. Als besonders gut geeignet hat sich die Verwendung eines para-tert.-Butylphenolformaldehydharzes gezeigt, insbesondere eines para-tert.-Butylphenolformaldehydharzes mit einem bevorzugten Methylolgehalt von 8 bis 15% und einem besonders bevorzugten Methylolgehalt von 10 bis 14%.

Die Menge des eingesetzten Harzes oder die Gesamtmenge an eingesetzten Harzen, falls mehr als ein Harz verwendet wird, beträgt bevorzugt 0,01 bis 25 phr, besonders bevorzugt 0,1 bis 10 phr und ganz besonders bevorzugt 0,1 bis 5 phr und weiterhin ganz besonders bevorzugt 0,1 bis 3 phr bzw. 0,1 bis 1 phr.

Erfindungswesentlich ist es weiterhin, dass die Kautschukmischung wenigstens ein Flammschutzmittel enthält.

Erfindungsgemäß werden als Flammschutzmittel Zn-Stearat oder Aluminiumtrihydrat oder Magnesiumhydroxid oder Hydrotalcit oder eine halogenfreie Phosphatverbindung oder Blähgraphit jeweils alleine oder in einer Kombination aus wenigstens zwei Flammschutzmitteln verwendet.

Die Verwendung von Zn-Stearat oder Aluminiumtrihydrat oder Magnesiumhydroxid oder Hydrotalcit oder eine halogenfreie Phosphatverbindung oder Blähgraphit haben sich hinsichtlich der Eignung für Trinkwasseranwendungen als besonders geeignet erwiesen. Bei der Verwendung von Zn-Stearat als Flammschutzmittel kann die Kautschukmischung in einer besonders bevorzugten Ausführungsform frei von ZnO sein, d.h. die Menge an ZnO beträgt in diesem Fall 0 phr. Hierdurch kann auf den Einsatz zusätzlicher gesundheitsgefährdender Zinkverbindungen verzichtet werden.

Zur Unterstützung der Harzvernetzung enthält die Kautschukmischung noch wenigstens eine Carbonsäure. Hierbei kann es sich um eine Monocarbonsäure oder um eine Dicarbonsäure oder um ein Gemisch aus Monocarbonsäure und Dicarbonsäure handeln.

Monocarbonsäuren sind Säuren, die über eine Carboxylgruppe verfügen.

Bei der Monocarbonsäure kann es sich um eine acyclische aliphatische Monocarbonsäure oder um eine cyclische aliphatische Monocarbonsäure oder um eine aromatische Monocarbonsäure oder um eine heterocyclische Monocarbonsäure handeln. Sie können jeweils gesättigt oder ungesättigt sein.

Beispiele für gesättigte cyclische Monocarbonsäuren sind Cyclobutansäure oder Cyclohexancarbonsäure.

Bevorzugt handelt es sich allerdings um eine gesättigte acyclische aliphatische Monocarbonsäure mit der Formel H(CH)ₘCOOH, wobei m hierbei Werte zwischen 0 und 40, bevorzugt zwischen 8 und 25, annehmen kann. Beispiele für solche gesättigten aliphatische Monocarbonsäuren sind Ameisensäure (m=0), Essigsäure (m=1), Propionsäure (m=2), Buttersäure (m=3), Valeriansäure (m=4), Capronsäure (m=5), Önanthsäure (m=6), Caprylsäure (m=7), Pelargonsäure (m=8), Caprinsäure (m=9), Undecansäure (m=10), Laurinsäure (m=11), Tridecansäure (m=12), Myristinsäure (m=13), Pentadecandisäure (m=14), Palmitinsäure (m=15), Margarinsäure (m=16), Stearinsäure (m=17), Nonadecansäure (m=18), Arachinsäure (m=19), Heneicosansäure (m=20), Behensäure (m=21), Lignocerinsäure (m=22), etc.

Dibasische Säuren sind Carbonsäuren, die über zwei Carboxylgruppen verfügen.

Bei der dibasischen Säure kann es sich um eine acyclische aliphatische dibasische Säure oder um eine cyclische aliphatische dibasische Säure oder um eine aromatische dibasische Säure oder um eine heterocyclische dibasische Säure handeln. Sie können jeweils gesättigt oder ungesättigt sein. Als aromatische dibasische Säuren können bspw. Phthalsäure, Terephthalsäure oder Isophthalsäure verwendet werden.

Bevorzugt handelt es sich allerdings um eine aliphatische dibasische Säure mit der Formel HOOC(CH)ₘCOOH, wobei m hierbei Werte zwischen 0 und 40, bevorzugt zwischen 6 und 22, besonders bevorzugt zwischen 6 und 12, annehmen kann. Beispiele für solche aliphatischen dibasische Säuren sind Oxalsäure (m=0), Malonsäure (m=1), Bernsteinsäure (m=2), Glutarsäure (m=3), Adipinsäure (m=4), Pimelinsäure (m=5), Suberinsäure (m=6), Azelainsäure (m=7), Sebacinsäure (m=8), Undecandisäure (m=9), Dodecandisäure (m=10), Brassylsäure (m=11), Tetradecandisäure (m=12), Thapsiasäure (m=14), Heptadecandisäure (m=15), Octadecandisäure (m=16), Nonadecandisäure (m=17) und Eicosandisäure (m=18), etc.

Alle Carbonsäuren können alleine oder in Kombination verwendet werden.

Besonders gut geeignete Säuren sind Stearinsäure und Benzoesäure.

Weiterhin enthält die Kautschukmischung noch wenigstens einen Füllstoff.

Hierbei kann es sich um alle der fachkundigen Person bekannten Füllstoffe handeln, wie bspw. Ruß, Graphit, Kohlenstoffnanoröhren (CNT), Kieselsäure, Calcium- und Aluminiumsilikate, Kieselgur, Kaolin, Kalkstein, Zeolithe, Cyclodextrine, Feldspat und/oder Talkum Kreide, Tonerde-Gel, Fasern (Kurz- und Langfasern, Glas-, Kohle-, Aramidfasern), Whisker (Aluminiumoxid, Siliziumcarbid), Glimmer, Magnetit, Kern/Mantel-Füllstoffe, Asphalt, Hartgummistaub, Chloride, Carbonate, Sulfate, Oxide und Hydroxide von Alkali- und Erdalkalimetallen, Al(OH)₃, PVC, Polymerpulver (z.B. PE oder PTFE-Pulver), Faktis, anorganische und organische Pigmente, organische oder anorganische Säuren, Glaskugeln, Holzmehl, Nussschalenmehl, handeln, die jeweils alleine oder in Kombination verwendet werden können.

Damit die Kautschukmischung eine gute elektrische Leitfähigkeit aufweist, hat sich besonders die Verwendung von leitfähigen Rußen, Graphit, CNT und Metallen und deren Verbindungen, insbesondere Eisenverbindungen, als bevorzugt erwiesen.

In einer bevorzugten Ausführungsform enthält die Kautschukmischung noch weitere Zusatzstoffe.

Die weiteren Zusatzstoffe sind ausgewählt aus der Gruppe bestehend aus Verarbeitungshilfsmittel, wie bspw. ZnO, Mg-Stearat, Stearinsäure, PE- und /oder PTFE-Pulver, und Weichmacher, wie z.B. Weißöle, Ester, Faktis undWachse, und Emulgatoren und Dispersionsmittel und Neutralisierungsmittel und Alterungsschutzmittel und Haftvermittler, wie bspw. DBU oder DBN und deren Salze, und Ozonschutzmittel und funktionelle Materialien, wie z.B. antimikrobielle Zusätze, Geruchsneutralisationsmittel, Aromen, und Gleit- und Formtrennmittel und Schutzmittel gegen Fäulnis und permeationshemmende Stoffe, wie bspw. Schichtsilikate. Die genannten Zusatzstoffe können jeweils alleine oder in Kombination vorhanden sein.

Die erfindungsgemäße Kautschukmischung wird bevorzugt in technischen Kautschukartikeln, wie bspw. Luftfedern, Gummi-Feder-Elemente, Antriebsriemen, Transportbänder, Fördergurte, Schläuche, Reifen, Dichtungsmaterialien, mehrschichtige Stoffbahnen zur Bildung von flexiblen Behältern, Zelten, Planen, Membranen, Schutzanzügen, Drucktüchern oder Faltenbälgen eingesetzt.

Bei Schläuchen handelt es bevorzugt um Zapfschläuche, Krümmerschläuche, Kraftstoffschläuche, Offshore- und Marineschläuche, Bunkerschläuche, Klimaschläuche und Farbspritzschläuche, beheizbare Schläuche oder permeationsarme Schläuche. Aufgrund der geringen Toxizität der Kautschukmischung, die eine Anwendung im Lebensmittel- und Trinkwasserbereich ermöglicht, wird die Kautschukmischung bevorzugt in Trinkwasserschläuchen und Lebensmittelschläuchen verwendet.

Die Kautschukmischung kann ebenso in Abdeckfolien, Planen, oder Auskleidungen für den Direktkontakt mit Trinkwasser eingesetzt werden. Sie kann aber auch in Förderbändern für den Transport von Lebensmitteln oder im Trinkwasserbereich Verwendung finden.

Die Erfindung soll nun anhand von Vergleichs- und Ausführungsbeispielen, die der Tabelle 1 zusammengefasst sind, näher erläutert werden. Die mit "E" gekennzeichnete Mischung ist hierbei eine erfindungsgemäße Mischung, während es sich bei der mit "V" gekennzeichneten Mischung um eine Vergleichsmischung handelt.

**Tabelle 1**

| **Bestandteile** | **Einheit** | **V1** | **E1** |
|---|---|---|---|
| NBR | phr | 100 | 100 |
| Phenol-Formaldehydharz* | phr | 5 | 5 |
| Aluminiumtrihydrat (ATH) | phr | 0 | 9 |

| **Versuchsergebnisse** | **Einheit** | **V1** | **E1** |
|---|---|---|---|
| Härte DIN 53505 | Shore A | 64 | 60 |
| Zugfestigkeit DIN 53504 S2 | N/mm² | 23 | 19 |
| Bruchdehnung DIN 53504 S2 | % | 567 | 639 |
| Druckverformungsrest, 25% Verf., 100°C DIN ISO 815 | % | 33 | 40 |
| Weiterreißwiderstand DIN ISO 34-1A | N/mm | 12 | 15 |
| Abrieb DIN ISO 4649 Verf. A | mm³ | 105 | 109 |

| | | | |
|---|---|---|---|
| ***Para-tert.-Butylphenolformaldehydharz; Methylolgehalt 8 bis 12%** | | | |

## Patentansprüche

1. Kautschukmischung, **dadurch gekennzeichnet, dass** sie wenigstens einen Kautschuk und wenigstens einen Füllstoff und wenigstens ein Harz als Vernetzungsmittel und wenigstens ein Flammschutzmittel und wenigstens eine Carbonsäure enthält, wobei der Kautschuk ausgewählt ist aus der Gruppe bestehend aus Nitrilkautschuk (NBR) und (teil)hydrierter Nitrilkautschuk (HNBR) und wobei als Flammschutzmittel Zn-Stearat oder Aluminiumtrihydrat oder Magnesiumhydroxid oder Hydrotalcit oder eine halogenfreie Phosphatverbindung oder Blähgraphit jeweils alleine oder in einer Kombination aus wenigstens zwei Flammschutzmitteln verwendet wird.

2. Kautschukmischung nach Anspruch 1, **dadurch gekennzeichnet, dass** der Füllstoff Kieselsäure und / oder Ruß ist.

3. Kautschukmischung nach einem der Ansprüche 1 bis 2 zur Herstellung einer Abdeckfolie, einer Plane, einer Auskleidung, eines Förderbands, eines Schlauchs oder einer Dichtung.

## Claims

1. Rubber mixture, **characterized in that** it contains at least one rubber and at least one filler and at least one resin as a crosslinking agent and at least one flame retardant and at least one carboxylic acid, wherein the rubber is selected from the group consisting of nitrile rubber (NBR) and (partially) hydrogenated nitrile rubber (HNBR) and wherein the flame retardant employed is Zn stearate or aluminium trihydrate or magnesium hydroxide or hydrotalcite or a halogen-free phosphate compound or expandable graphite in each case alone or in a combination of at least two flame retardants.

2. Rubber mixture according to Claim 1, **characterized in that** the filler is silica and/or carbon black.

3. Rubber mixture according to either of Claims 1 to 2 for producing a covering film, a tarpaulin, a lining, a conveyor belt, a hose or a seal.

## Revendications

1. Mélange de caoutchouc, **caractérisé en ce qu'**il contient au moins un caoutchouc et au moins une charge et au moins une résine comme agent de réticulation et au moins un agent ignifuge et au moins un acide carboxylique, le caoutchouc étant choisi dans le groupe constitué du caoutchouc nitrile (NBR) et du caoutchouc nitrile (partiellement) hydrogéné (HNBR), et le stéarate de Zn ou le trihydrate d'aluminium ou l'hydroxyde de magnésium ou l'hydrotalcite ou un composé phosphate non halogéné ou le graphite expansé étant utilisé comme agent ignifuge, respectivement seul ou en une association d'au moins deux agents ignifuges.

2. Mélange de caoutchouc selon la revendication 1, **caractérisé en ce que** la charge est la silice et/ou le noir de carbone.

3. Mélange de caoutchouc selon l'une des revendications 1 et 2 pour la fabrication d'un film de protection, d'une bâche, d'un revêtement, d'une bande transporteuse, d'un tuyau flexible ou d'un joint d'étanchéité.
